# EUROPÄISCHE PATENTSCHRIFT

(11) **EP 4 203 300 B1**
(45) Veröffentlichungstag und Bekanntmachung des Hinweises auf die Patenterteilung: **23.04.2025**
(21) Anmeldenummer: 21216315.8
(22) Anmeldetag: 21.12.2021
(51) Int. Cl.: H02S 20/23, F24S 25/632

(54) **TRAG- UND BEFESTIGUNGSANORDNUNG FÜR SOLARMODULE**
SUPPORTING AND FIXING ARRANGEMENT FOR SOLAR MODULES
AGENCEMENT DE SUPPORT ET DE FIXATION POUR MODULES SOLAIRES

(43) Veröffentlichungstag der Anmeldung: 28.06.2023
(73) Patentinhaber: ClickCon GmbH & Co.KG, 79111 Freiburg i.Br. (DE)
(72) Erfinder: Dreger, Max, 79115 Freiburg (DE); Koller, Alexander, 79112 Opfingen (DE)
(74) Vertreter: Isarpatent

(56) Entgegenhaltungen:
- EP-A1- 2 187 146
- EP-A2- 2 017 554
- US-A1- 2010 313 506

## Beschreibung

Die Erfindung betrifft eine Traganordnung, die vorgesehen und eingerichtet ist, Solarmodule gegenüber einer von diesen Solarmodulen überdeckten Fläche beanstandet abzustützen.

Solarmodule werden in vielfältigen Ausführungen an Flächen, die einer Sonneneinstrahlung zugänglich sind, angeordnet. Hierbei werden Traganordnungen eingesetzt, um eine Anzahl von Solarmodulen beispielsweise gegenüber einer Dachfläche abzustützen und ortsfest zu halten. Darüber hinaus kennt man in der Zwischenzeit auch Traganordnungen, die die Solarmodule im Prinzip in beliebiger Höhe und Neigung gegenüber einer Bodenfläche abstützen und auf diese Weise eine Dacheinrichtung bilden.

Nachdem die Trag- und Befestigungsanordnung (der Einfachheit halber in der Folge auch kurz Traganordnung genannt) sich zusammen mit den Solarmodulen naturgemäß im Freien befindet, ist sie selbstverständlich allen auftretenden Wetterphänomenen ausgesetzt, die sowohl mit nicht unerheblichen Temperaturschwankungen als auch mit einer Beauftragung von unterschiedlichsten Partikeln sowie verschiedenen Aggregatzuständen von Wasser (Wasser, Schnee, Eis) einher gehen kann. Dies führt dazu, dass sich sowohl Teile der Traganordnung, als auch der Solarmodule, die im Übrigen in der Regel gerahmt sind, sich ausdehnen und zusammenziehen, und überdies beispielsweise Wasser in Form von Regen von den Flächen der Solarmodule wieder abgeführt werden soll und muss. Bei erhöhten Temperaturen beispielsweise im Sommer ist es weiter von Vorteil, wenn die Traganordnung zur Abfuhr von Wärme entsprechend hinterlüftet ist.

Aus der EP 2 187 146 A1 ist eine Traganordnung bekannt, die vorgesehen und eingerichtet ist, Solarmodule gegenüber einer von diesen Solarmodulen überdeckten Fläche beabstandet abzustützen, mit wenigstens zwei parallel zueinander verlaufenden Tragrinnenprofilen, die jeweils mit mindestens einem Tragsteg versehen sind, der seinerseits jeweils eine erste Längsseite und eine zweite Längsseite aufweist, wobei zwischen den Tragstegen der wenigstens zwei Tragrinnenprofile eine Mehrzahl von Solarmodulen angeordnet ist, die in Gebrauchsstellung entlang ihrer Längsseiten nebeneinander liegen, und mit einer Mehrzahl von Sprossenteilen, die sich jeweils zwischen den wenigstens zwei parallelen Tragrinnenprofilen erstrecken, und jeweils Rahmenstücke zweier benachbarter Solarmodule zumindest mittelbar abstützen.

Es ist daher die Aufgabe der vorliegenden Erfindung, eine Traganordnung für Solarmodule zu Verfügung zu stellen, die zum einen die Solarmodule verschiedener Hersteller mit verschiedenen geometrischen Abmessungen sicher an der Traganordnung hält, sodass keinerlei Relativverschiebung der Solarmodule gegenüber einander und/oder der Traganordnung stattfindet, wobei der Traganordnung und den Solarmodulen gestattet ist, sich unabhängig voneinander auszudehnen oder zusammenzuziehen, und zum anderen eine Möglichkeit geschaffen wird, Nässe von der Außenseite der Traganordnung im Wesentlichen derart abzuführen, dass diese die überdeckten Fläche nicht beaufschlagt und konstruktiv ohne die Verwendung von Dichtgummis eine dichte Dachhaut gebildet ist.

Diese Aufgabe wird durch eine Traganordnung mit den Merkmalen des Anspruchs 1 gelöst. Die erfindungsgemäße Lösung besteht also insbesondere darin, dass diese wenigstens zwei parallel zueinander verlaufenden Tragrinnenprofilen aufweist, die in einer Ebene liegen und die jeweils mit einem Tragsteg, und an diesem mit einer ersten und einer zweiten Längsseite versehen sind, wobei zwischen den Tragstegen der wenigstens zwei Tragrinnenprofile eine Mehrzahl von Solarmodulen angeordnet ist, die in Gebrauchsstellung entlang ihrer Längsseiten nebeneinander liegen. Weiter ist eine Mehrzahl von Sprossenteilen vorgesehen, die sich jeweils zwischen den wenigstens zwei parallelen Tragrinnenprofilen erstrecken, und Rahmenstücke zweier benachbarter Solarmodule zumindest mittelbar abstützen. Außerdem ist eine Mehrzahl von Halteelementen vorgesehen, welche mit einer ersten Längsseite des Tragstegs eines ersten der wenigstens zwei Tragrinnenprofile lösbar verbindbar gehalten und abgestützt sind, wobei jeweils ein zugeordnetes Sprossenteil an seinem ersten Ende in einem Eingriffsabschnitt ein freies Ende eines Halteelements stirnseitig aufnimmt. Schließlich weist die Traganordnung eine Mehrzahl von Verrieglungselementen auf, die jeweils an einem zweiten Ende eines der Sprossenteile anordenbar oder angeordnet sind, welches der zweiten Längsseite eines Tragstegs eines zweiten der wenigstens zwei Tragrinnenprofile zugewandt ist, wobei jedes der Verrieglungselemente eingerichtet ist, an dem zweiten Ende des jeweiligen Sprossenteils in einer Führung entlang von dessen Längserstreckung bewegbar zu sein und mit der zweiten Längsseite des Tragstegs des zweiten Tragrinnenprofils durch Verschieben entlang der Führung derart verbunden zu werden, dass die dem zweiten Tragrinnenprofil zugewandten Enden der Solarmodule zusammen mit dem Ende der Sprossenteile an dem Tragsteg des zweiten Tragrinnenprofils gehalten und verriegelt sind.

Die Montage des Systems ebenso wie die Verriegelung des Verriegelungselements kann dabei in vorteilhafter Weise von unten sowie von oben geschehen, was den Umgang mit der Traganordnung erheblich vereinfacht.

Erfindungsgemäß werden Solarmodule also zwischen sich parallel erstreckenden Tragrinnenprofilen der Traganordnung angeordnet, wobei zwei benachbarte Solarmodule mit ihren einander gegenüberliegenden Rahmenelementen in sich zwischen den Tragrinnenprofilen erstreckende Sprossenteile eingreifen, die wiederum über Halte- und Verriegelungselemente an den unterschiedlichen Seiten eines Tragstegs der Tragrinnenprofile festgelegt sind. Durch die vorstehend aufgezeigte Merkmalskombination werden zum einen die Solarmodule an den Tragrinnenprofilen sicher gehalten, zum anderen werden die zu einem Modulfeld gruppierten Solarmodule und die Tragrinnenprofile derart thermisch entkoppelt, dass eine unabhängige Ausdehnung und Schrumpfung der Komponenten ermöglicht ist, und außerdem Nässe von den Modulen in einfacher Weise abgeführt werden kann. Durch das Abfließen von Wasser in das jeweils tiefer gelegene von zwei Tragrinnenprofilen kann ein Modulfeld mit an der Traganordnung in Reihe angeordneten Solarmodulen reihenweise entwässert werden.

Hierbei entsteht eine im Prinzip beliebig skalierbare statische Tragrinnen-Struktur, die durch schraubenloses Verbinden dieser Struktur mit Photovoltaik (PV)-Modulen (Solarmodulen) ein ohne Dichtgummi dichtes, selbsttragendes PV-Dachsystem implementiert. Dabei ist es überdies unerheblich, ob die Solarmodule "längs" oder "quer" in der Anordnung aufgenommen sind, es existiert als hinsichtlich deren Ausrichtung keine Vorzugsrichtung.

Bevorzugte Weiterbildungen der erfindungsgemäßen Traganordnung finden sich in den entsprechenden Unteransprüchen.

Eine vorteilhafte Weiterbildung der erfindungsgemäßen Traganordnung kann darin bestehen, dass die erste Längsseite und die zweite Längsseite der Tragstege der wenigstens zwei Tragrinnenprofile sich unterscheiden und die wenigstens zwei Tragrinnenprofile jeweils mit einem Boden versehen sind, von dem der jeweilige Tragsteg vorspringt. Durch die Ausbildung mit zwei sich unterscheidenden Längsseiten ist es möglich, unterschiedliche Vorrichtungen und Mechanismen zur Festlegung der beiden Enden jedes der Mehrzahl von Sprossenteilen an gegenüberliegenden Tragrinnenprofilen vorzusehen. Der jeweilige Tragsteg wird hierbei durch den jeweiligen Boden in zweckmäßiger Weise stabilisiert.

Bei der erfindungsgemäßen Traganordnung können in Erstreckungsrichtung der Tragrinnenprofile jeweils mehrere von diesen hintereinander angeordnet sein. Hierfür können bei einer anderen Weiterbildung der Traganordnung Längsseiten der Tragrinnenprofile jeweils voneinander beabstandet ausgebildet sind und an ihren oberen und unteren Enden jeweils durch den Tragrinnenprofilboden und ein Dachstück verbunden sein, wodurch ein Hohlraum an dem jeweiligen Tragrinnenprofil ausgebildet ist In den erwähnten Hohlraum lässt sich ein Versteifungs- oder Verbindungselement vollständig einbringen, wenn bereits ein Tragrinnenprofil für sich einen weiten Raum überspannt, genauso lassen sich die beiden Enden eines Versteifungselements in Hohlräume einbringen, die zwei benachbarten Tragrinnenprofilen in Längsrichtung zugeordnet sind, sodass mittels der Versteifungselemente in den Hohlräumen die Tragrinnenprofile in ihrer Längsrichtung im Prinzip beliebig verlängerbar sind.

Wie bereits erwähnt können an den Boden der wenigstens zwei Profile weitere Einrichtungen zum Stützen von weiteren Elementen der Traganordnung vorgesehen werden. Bei einer bevorzugten Weiterbildung jeweiligen Tragstegs ein Stützelement aufweisen, dass von dem Boden absteht und dessen Ende einen Endbereich eines Sprossenteils trägt. Der betreffende Endbereich des Sprossenteils muss dabei nicht notwendigerweise direkt auf dem freien Ende des Stützelements aufliegen. An den Stützelementen können überdies weitere Einrichtungen vorgesehen sein, die der Stabilität und/oder Festlegung der Traganordnung zuträglich sind und die vorzugsweise in den Endbereichen der Stützelemente zu finden sind. So können an den Endbereichen der Stützelemente etwa jeweils Eingriffe vorgesehen sein, die beispielsweise mit hakenartigen Vorsprüngen eines zugeordneten Klemmelements in Eingriff bringbar sind. Dieses kann dazu vorgesehen sein, ein Tragrinnenprofil an einer Dachstruktur festzulegen. Mittels dieser Einrichtungen kann auch ein Sprossenteil an einem Stützelement festgelegt werden, was bspw. im Bereich des Ortgangs vorteilhaft ist.

Zusätzliche Stabilität kann der Konstruktion mit den Sprossenteilen durch eine Weiterbildung verliehen werden, bei welcher zwischen zwei Sprossenteilen, bevorzugt zwischen je zwei Sprossenteilen, ein Querträger anordenbar oder angeordnet ist. Hierdurch kann die Tragfähigkeit der erfindungsgemäßen Traganordnung bspw. im Hinblick auf große Schnee- und Windlasten verbessert werden.

Bei einer anderen vorteilhaften Weiterbildung der Traganordnung können hinsichtlich der sich zwischen den wenigstens zwei parallelen en erstreckenden Sprossenteile diese einen nach oben offenen Querschnitt mit einer vorgebbaren Länge, insbesondere einen C- oder U-förmigen Querschnitt aufweisen, in welchen Rahmenstücke benachbarter Solarmodule jeweils eingreifen und derart in den offenen Querschnitt des zugeordneten Sprossenteils aufgenommen sind, dass sie sich dort einander gegen überwiegend parallel zueinander zwischen den beiden Tragrinnenprofilen erstrecken. Die Sprossen dienen weiterhin zur Entwässerung zwischen den Modulen und führen das Wasser in den wasserführenden Raum innerhalb der Tragrinnenprofile.

Vorkonfektionierte Solarmodule verschiedener Hersteller können jeweils mit verschiedenen Rahmenstücken, die insbesondere eine sich unterscheidende Höhenerstreckung aufweisen, versehen sein. Besonders bevorzugt kann daher bei einer weiteren Weiterbildung der Traganordnung jedem Sprossenteil zumindest ein Abstandsstück zugeordnet sein, dass in den Querschnitt des Sprossenteils lösbar aufgenommen ist und eine Auflage für die in den Querschnitt aufgenommenen Rahmenstücke der Solarmodule bildet. Das Abstandsstück ist dabei an die jeweilige Höhenerstreckung des Rahmenstücks des Solarmoduls/der Solarmodule derart anpassbar oder angepasst, dass die Solarmodule alle jeweils mit dem gleichen Höhenbetrag von dem Boden der Sprossenteile vorstehen und nach außen eine gleichmäßige Fläche bilden können. Gehalten werden die Abstandsstücke in dem Querschnitt der Sprossenteile durch ihre Materialflexibilität und Form, die eine Vorspannung gegenüber den Seitenwänden der Sprossenteile gestattet. Es können auch mehrere Abstandsstücke pro Sprossenteil vorgesehen sein, wodurch die Abstützung der Rahmenstücke weiter verbessert wird.

Die Traganordnung ist erfindungsgemäß mit einer Mehrzahl von Halteelementen versehen, die mit einer ersten Längsseite des Tragstegs eines ersten der wenigstens zwei Tragrinnenprofile lösbar verwendbar gehalten und abgestützt sind. Um dabei die Bereiche von Solarmodulen im Verbund mit Sprossen und Verriegelungselement in geeigneter Weise sicher im Wesentlichen ortsfest halten zu können, weist jedes der Halteelemente eine im Querschnitt in etwa C förmige Aufnahme mit einem parallel zu dem Tragsteg angeordneten Aufnahmeboden auf. Von den in vertikaler Richtung beanstandeten Enden des Aufnahmebodens stehen die Schenkel der Aufnahme im Wesentlichen derart quer ab, dass die erwähnten Eckbereiche zweier benachbarter Solarmodule durch die Aufnahme von mindestens zwei Seiten umgriffen sind.

Zur Abdeckung unterschiedlich großer Flächen sind Solarmodule mit unterschiedlichen flächigen Erstreckungen erhältlich. Um die Traganordnung an diese unterschiedlichen Erstreckungen hinsichtlich beispielsweise einer parallel zu den Tragstegen verlaufenden Quererstreckung der Solarmodule anpassen zu können, kann jedes der Halteelemente entlang der ersten Längsseite des Tragstegs verschiebbar vorgesehen sein, wobei es mit einem hakenartigen Vorsprung an der der ersten Längsseite zugewandten Seite des Aufnahmebodens in eine Scharnieröffnung an der Längsseite eingreift, wodurch das Halteelemente gegen den Tragsteg verschwenkbar eingerichtet ist. Aufgrund dieser Verschwenkbarkeit lässt sich der Aufnahmeboden der C-förmigen Aufnahme des Halteelements gegenüber der ersten Längsseite des Tragsteg verschwenken, wodurch das in der Scharnieröffnung steckende Ende des hakenartigen Vorsprungs aus einer Art Klemmung gelöst wird, und sich insbesondere dann in einfacher Weise entlang der Längsseite des Tragstegs verschieben lässt. Auch in einem verrasteten Zustand lässt sich das Halteelement geringfügig verschieben. So wird sichergestellt, dass keine thermisch induzierten Spannungen im System entstehen. Weiterhin sorgen die Halteelemente für einen Abstand zwischen Solarmodul und und Tragsteg und ermöglichen so eine Hinterlüftung und Entwässerung der Module.

Bei einer anderen Weiterbildung der Traganordnung ist das Halteelement mit einem Stützsteg an der ersten Längsseite des Tragstegs derart abgestützt, dass ein in der Aufnahme des Halteelements aufgenommenes Solarmodule sich über den Aufnahmeboden der Aufnahme an dem Tragsteg abstützen kann.

Um jedes der Halteelemente nach Bestimmung des jeweiligen Ortes an den Tragsteg in der gewünschten Position fixieren zu können, kann bei einer vorteilhaften Weiterbildung der erfindungsgemäßen Traganordnung das Halteelement an dem Tragsteg festgelegt werden. Hierzu kann zweckmäßigerweise an einem dem Boden des Tragrinnenprofils zugewandten Ende der Aufnahme das in den Eingriffsabschnitt des Sprossenteils aufgenommene freie Ende des Halteelements und ein Rastarm angeordnet sein, dessen freies Ende eingerichtet ist mit einem Rastvorsprung an dem Tragsteg (an der Längsseite des Tragstegs) zu verrasten und derart das Halteelemente festlegen. Hierbei kann etwa der Rastarm einen gekrümmten Abschnitt des Halteelements bilden, und, obgleich an einem dem Boden des Trageprofils zugewandten Ende der Aufnahme angeordnet, an dem dem Sprossenteil zugewandten freien Ende des Schenkels angeordnet sein. Das Ende des gekrümmten Abschnitts wiederum kann dabei mit einer Rastnase versehen sein, die bei entsprechendem Druck gegen das Halteelemente in Richtung des Tragstegs mit dem von dem Tragsteg schräg in Richtung des Bodens des Tragrinnenprofils vorspringenden Rastvorsprung verrastet werden. Bevorzugt kann der Rastarm mit seinem gekrümmten Abschnitt dabei einen Winkel von in etwa 90° beschreiben, es sind aber beispielsweise auch andere Winkelstellungen bezüglich des Rastvorsprungs denkbar. Ebenso kann der gesamte Rastarm konstruktiv auch anders ausgebildet sein.

Um an der zweiten Längsseite des Tragstegs bzw. des Tragrinnenprofils angeordnete Solarmodule gegen eine Abheben Bewegung aus ihrer Gebrauchsstellung zu sichern ist es bei einer anderen vorteilhaften Weiterbildung der erfindungsgemäßen Traganordnung vorgesehen, dass an dem freien Ende des Tragstegs ein Quersteg angeordnet ist, der von der zweiten Längsseite vorspringt und dieser Längsseite zugewandten Endbereiche nebeneinander angeordneter Solarmodule an deren Oberfläche übergreift. Der genannte Quersteg kann dabei quer von den Tragsteg abstehen.

Damit die Mehrzahl von Verriegelungselementen jeweils in ihrer Ausgestaltung der Form nach zumindest in Grenzen flexibel gehalten werden können, um an gewisse bauliche Veränderungen des Tragstegs mit seiner zweiten Längsseite anpassbar zu sein, kann es bei einer anderen Weiterbildung der Traganordnung vorgesehen sein, die Verriegelungselemente mehrgliedrig mit einem Halteglied, einem Riegelglied und einem Führungsglied vorzusehen, wobei das Halteglied und das Riegelglied sich im Wesentlichen parallel zueinander und zu der zweiten Längsseite des Tragstegs erstrecken, während das Führungsglied quer dazu in Richtung des Sprossenteils vorspringt. Die Glieder in paralleler Anordnung, also das Halteglied und das Riegelglied können gestuft parallel zueinander sein, also mit einem schrägen Verbindungsstück derart zwischen sich, dass die beiden Glieder aneinander anschließen. Die beiden Glieder können aber auch kollinear ausgebildet sein. Dabei kann im Bereich des Verbindungsstücks, also der Abstufung zwischen den Gliedern, dass von diesen weg weisende Halteglied angelegt sein. Denkbar ist bei dem Verriegelungselement also beispielsweise eine Art dreiflügelige, jedoch einstückige Struktur.

Erfindungsgemäß ist das Riegelglied des Verriegelungselements eingerichtet, während des Verriegeln des Verriegelungselements durch Bewegen entlang des Sprossenteils mit seinem freien Ende eine Querschnittsänderung der zweiten Längsseite des Tragstegs zu überwinden, die die umgekehrte Bewegung des Verriegelungselements derart blockiert, dass die betreffende Verriegelung nur mit einem gewissen Kraftaufwand wieder aufgehoben werden kann, welcher das Riegelglied zurück hinter die Querschnittsänderung drückt. Die Querschnittsänderung kann beispielsweise derart ausgebildet sein, dass in Richtung des Tragrinnenprofilbodens die betreffende Längsseite des Tragstegs selbst einen Rücksprung bildet, den das Riegelglied und mit diesem das Verriegelungselements beim Verriegeln überwindet, und an welchen das Riegelglied bei der umgekehrten Bewegung stößt, um zurückgehalten zu werden. Bei den Verriegelungsvorgang wird, abgesehen von einer Verschiebung der beiden in das Sprossenteil eingreifenden Solarmodule in Richtung auf die erste Längsseite eines gegenüberliegenden Tragrinnenprofils hin, auf das Solarmodul keine weitere Kraft ausgeübt, sodass die Solarmodule in ihrer Gebrauchsstellung mechanisch spannungsfrei an der Traganordnung angeordnet sind. Überdies sind sie von den Tragrinnenprofilen durch die Festlegung mittels der Halteelemente und der Verriegelungselements derart thermisch entkoppelt, dass sie sich unabhängig voneinander ausdehnen und zusammenziehen können.

Sowohl bei dem Halteelement wie auch bei dem Verriegelungselement ist bei vorhandener Stabilität der jeweiligen Komponente eine gewisse Flexibilität dessen Funktion zuträglich, etwa, damit das Verriegelungselement mit seinem Riegelglied die Querschnittsänderung überwinden kann. Passende Strukturen mit geeigneter Materialflexibilität können Komponenten beispielsweise zumindest teilweise aus Aluminium ausgebildet sein. Es sind aber auch andere Materialien denkbar.

Damit die erfindungsgemäße Traganordnung selbst eine dichte Dachhaut bilden kann, die einen unter ihr befindlichen Bereich geeignet überdacht, sieht eine vorteilhafte Weiterbildung vor, dass die Tragrinnenprofile jeweils mit einem Strukturelement einer Dachstruktur verbindbar oder verbunden sind. Hierbei können die Tragrinnenprofile etwa an den Sparren als Strukturelemente einer Dachstruktur festgelegt werden, wozu sie mittels Klemmelementen festgelegt werden können, die beispielsweise mit einer entsprechenden Aussparung an den Stützelementen der Tragrinnenprofile in Eingriff gebracht werden kann. Es sind aber auch andre Festlegungen denkbar. Überdies können die Tragrinnenprofile mit Pfetten als Strukturelemente verbunden werden, um größere Spannweiten zu erzielen. Mit diesen können sie beispielweise durch Verschrauben oder Verschweißen verbunden werden.

Im Rahmen der Diskussion des Hohlraums an dem Tragsteg wurde bereits angesprochen, dass die Tragrinnenprofile der Traganordnung entlang ihrer Längsrichtung durch ebensolche, insbesondere baugleiche Tragrinnenprofile fortsetzbar, also verlängerbar sind wodurch eine im Prinzip nicht begrenzte Verlängerung in einer ersten Verlegerichtung (und damit auch Raumrichtung) ermöglicht wird. Überdies kann bei einer weiteren Weiterbildung der Traganordnung eine Anzahl von n zueinander parallelen Tragrinnenprofilen vorgesehen sein, wobei n eine natürliche Zahl größer gleich zwei ist, wodurch die zu der vorherigen senkrechte Raum Richtung ebenfalls nicht begrenzt ist.

Um sich gewissen geometrischen Anforderungen wie zum Beispiel Änderungen des Bodenprofils anpassen zu können, aber auch um in gewisser Hinsicht ästhetischen Gesichtspunkten gerecht zu werden, können bei einer weiteren Weiterbildung der Traganordnung die Tragrinnenprofile vorgesehen sein, die Solarmodule der Traganordnung derart relativ zueinander anzuordnen, dass die Solarmodule Flächenstücke jeweils der gleichen Ebene oder gekrümmten Fläche bilden. Dies bedeutet, dass im Falle rein horizontale Erstreckung in den beiden zueinander senkrechten Raumrichtungen die Solarmodule nicht nur eine dichte Dachhaut bilden, sondern vielmehr auch das Modulfeld im Wesentlichen eben ist. Darüber hinaus kann aber, etwa bei entsprechend gekrümmten Sprossenteilen, die Traganordnung auch einen gekrümmten Querschnitt aufweisen, sodass sich beispielsweise mittels der Traganordnung eine gebogene Fläche im Bereich eines Dachfirsts realisieren lässt. Dabei sind, abhängig von der Krümmung der Solarmodule verschiedene Ausbildungen denkbar, die gemeinsam neben- oder auch hintereinander angeordnet beispielsweise eine Art gekrümmte Reihe bilden können.

Die obigen Ausgestaltungen und Weiterbildungen lassen sich, sofern zweckmäßig, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

Die Erfindung wird nachstehend anhand von Ausführungsbeispielen in den Figuren der Zeichnung näher erläutert. In teilweise schematisierter Darstellung zeigen hierbei die:
Fig. 1 eine ebene Seitenansicht einer ersten Ausführungsform einer Traganordnung mit zwei einander gegenüberliegenden Tragrinnenprofilen, in welcher deren Montagesituation dargestellt ist, sich zwischen den Tragrinnenprofilen erstreckenden Sprossenteilen sowie an der Traganordnung angeordneten Solarmodulen an einer schrägen Dachfläche derart, dass die Traganordnung rechts eine Firstseite und links eine Traufseite aufweist.
Fig. 2a, 2b eine ebene Seitenansicht einer zweiten Ausführungsform einer Traganordnung mit zwei einander gegenüberliegenden Tragrinnenprofilen, sich zwischen den Tragrinnenprofilen erstreckenden nicht eingebauten Sprossenteilen, bei der die Tragrinnenprofile die gleiche Höhe aufweisen (Fig. 2a) und eine Vergrößerung eines Endbereichs eines Sprossenteils, an welchem ein Verriegelungselement angeordnet wird (Fig. 2b);
Fig. 3a, 3b eine ebene Seitenansicht der Traganordnung der Fig. 2a, 2b mit an dem einen Sprossenende angeordneten Verriegelungselement, wobei das Sprossenteil in Richtung des ersten Tragrinnenprofils bewegt wird, an dessen erster Längsseite das Halteelement angeordnet ist;
Fig. 4a, 4b eine ebene Seitenansicht der Traganordnung der Fig. 3a, 3b in welcher der dem ersten Tragrinnenprofil zugewandte Endbereich des Sprossenteils das Riegelglied des Verriegelungselements aufnimmt und das andere Ende des Sprossenteils in Richtung des zweite Tragrinnenprofils geschwenkt und in das Halteelement eingeschoben wird;
Fig. 5a, 5b eine ebene Seitenansicht der Traganordnung der Fig. 4a, 4b in welcher der dem zweiten Tragrinnenprofil zugewandte Endbereich des Sprossenteils an das Sprossenteil verschwenkt ist und das Verriegelungselement ausgezogen ist;
Fig. 6a, 6b eine ebene Seitenansicht der Traganordnung der Fig. 5a, 5b bei welcher ein Solarmodul an der Traganordnung angeordnet wird, wobei zunächst ein Endbereich des Solarmoduls in der Nähe des zweiten Tragrinnenprofils angeordnet wird;
Fig. 7a, 7b eine ebene Seitenansicht der Traganordnung der Fig. 6a, 6b in welcher das Solarmodul mit seinem anderen Ende in die Nähe der ersten Längsseite des ersten Tragrinnenprofils verschwenkt ist;
Fig. 8a, 8b eine ebene Seitenansicht der Traganordnung der Fig. 7a, 7b in welcher das Solarmodul an der Traganordnung durch Verriegeln des Verriegelungselements an der zweiten Längsseite des zweiten Tragrinnenprofils festgelegt wird und über eine Positionsänderung des Verriegelungselements in Richtung Sprosse fixiert wird;
Fig. 9a, 9b eine perspektivische Ansicht von oben auf einen Ausschnitt einer Traganordnung ohne Solarmodule (Fig. 9a) und eine Vergrößerung des stirnseitigen Bereichs eines Tragrinnenprofils mit den beiden Längsseiten;
Fig. 10 eine perspektivische Ansicht von oben auf den Ausschnitt einer Traganordnung aus der Fig. 9 mit daran angeordneten Solarmodulen; und
Fig. 11 eine ebene Seitenansicht einer Ausführungsform der Traganordnung, bei der ein Tragrinnenprofil mit einer Pfette einer Dachstruktur verbunden ist.

Die beigefügten Zeichnungsfiguren sollen dabei ein tieferes Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungsfiguren. Die Elemente der Zeichnungen sind nicht notwendigerweise maßstabsgetreu zueinander gezeigt.

In sämtlichen Figuren sind gleiche bzw. funktionsgleiche Elemente und Vorrichtungen - sofern nichts anderes angegeben ist - mit denselben Bezugszeichen versehen worden.

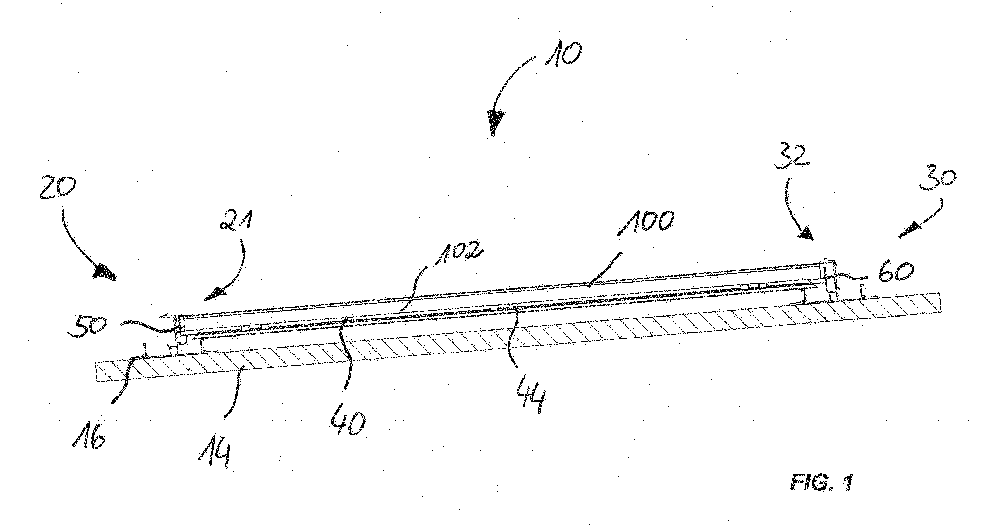

Die Fig. 1 zeigt eine ebene Seitenansicht einer ersten Ausführungsform einer im Ganzen mit 10 bezeichneten Traganordnung mit zwei einander gegenüberliegenden Tragrinnenprofilen 20, 30, sich zwischen den Tragrinnenprofilen 20, 30 erstreckenden Sprossenteilen 40 sowie an der Traganordnung 10 angeordneten Solarmodulen 100, wobei die Traganordnung an einem Dachsparren 14 mittels Klemmelementen 16 festgelegt ist und eine Firstseite und eine Traufseite aufweist. In Fig. 1 ist die Montagesituation der Traganordnung 10 gezeigt, bei der mittels dieser Solarmodule an einer Dachstruktur, hier in Form eines Sparrens 14, angeordnet sind. Die obere Firstseite befindet sich dabei bei dem in der Figur rechts abgebildeten zweiten Tragrinnenprofil 30, während die untere Traufseite bei dem in der Figur links abgebildeten ersten Tragrinnenprofil 20 zu finden ist. Zwischen den zueinander parallelen Tragrinnenprofilen 20, 30 erstreckt sich ein Sprossenteil 40 und nimmt ein sich parallel zu dem Sprossenteil 40 erstreckendes Rahmenstück 102 eines Solarmoduls 100 auf. Das Solarmodul 100 ist an der Traganordnung 10 zwischen den beiden Tragrinnenprofilen 20, 30 gehalten. Genauer gesagt erstreckt es sich zwischen der ersten Längsseite 21 des ersten Tragrinnenprofils 20 und der zweiten Längsseite 32 des zweiten Tragrinnenprofils 30. Das Solarmodul ist dabei durch das an der ersten Längsseite 21 des ersten Tragrinnenprofils 20 befindliche Halteelement 50 und dem an der zweiten Längsseite 32 des zweiten Tragrinnenprofils 30 befindliche Verriegelungselement 60 an der Traganordnung 10 festgelegt. Weiter erkennt man in der Fig. 1 noch, dass das Solarmodul 100 mit seinem Rahmenstück 102 an dem Sprossenteil 40 zugeordneten Abstandsstücken 44 abgestützt ist, die die Rahmenstücke 102 gegenüber dem Boden des Sprossteils 40 abstützen. Weitere Bezugszeichen sind an der Fig. 1 aus Gründen der Übersichtlichkeit weggelassen.

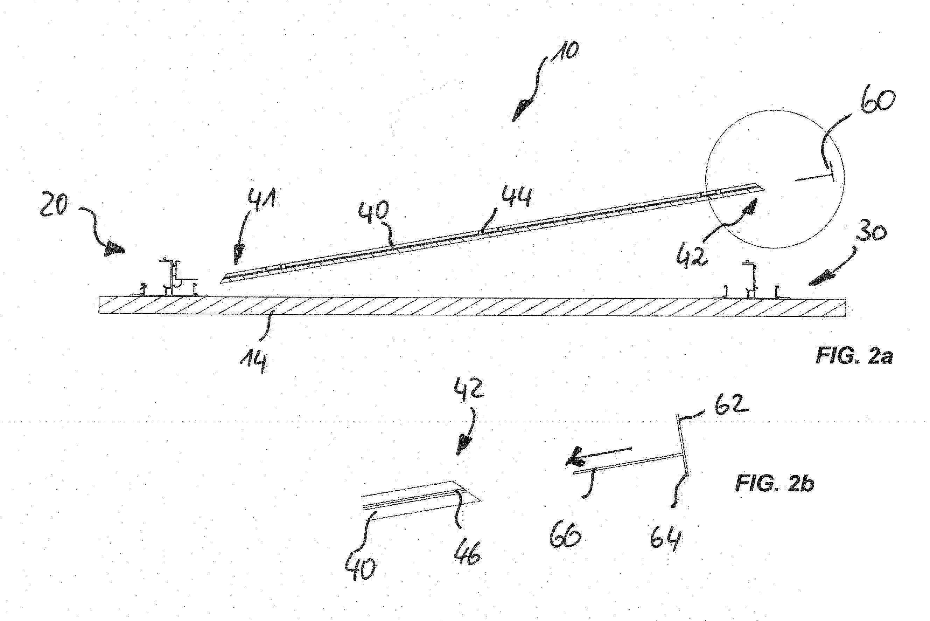

Die nun folgenden Figuren 2 bis 8 zeigen eine zeitliche Abfolge einer Montage einer Traganordnung 10 mit ersten und zweiten Tragrinnenprofilen 20, 30, sich zwischen diesen erstreckenden Sprossenteilen 40, Halteelementen 50 und Verbindungselementen 60.

Die Fig. 2a, 2b zeigt eine ebene Seitenansicht einer zweiten Ausführungsform einer Traganordnung 10 mit zwei einander gegenüberliegenden Tragrinnenprofilen 20, 30, sich zwischen den Tragrinnenprofilen 20, 30 erstreckenden Sprossenteilen 40, in welcher die Tragrinnenprofile 20, 30 die gleiche Höhe aufweisen (Fig. 2a) und eine Vergrößerung eines Endbereichs eines Sprossenteils, an welchem ein Verriegelungselement 60 angeordnet wird (Fig. 2b). Hierbei wird das Verriegelungselement 60 mit einem Führungsglied 66 in Pfeilrichtung in eine Führung 46 an dem zweiten Ende 42 des Sprossenteils 40 eingeführt. Das erste Ende 41 des Sprossenteils 40 wird in die Nähe des ersten Tragrinnenprofils 20 der Traganordnung gebracht, um dort angeordnet zu werden.

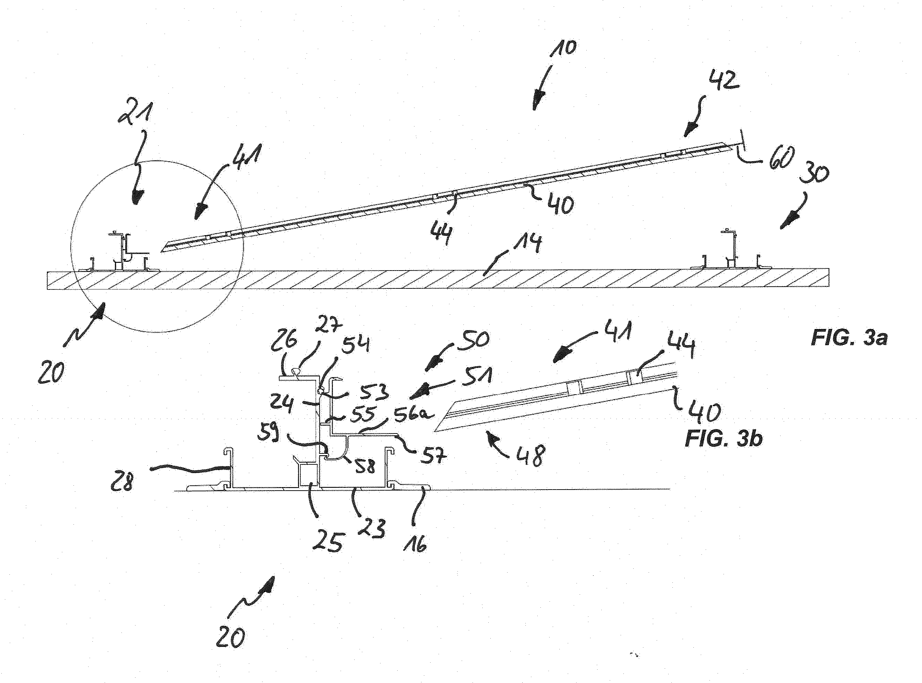

Die Fig. 3a, 3b zeigen eine ebene Seitenansicht der Traganordnung der Fig. 2a, 2b mit an dem einen Sprossenteilende 42 angeordneten Verriegelungselement 60, wobei das Sprossenteil 40 in Richtung des ersten Tragrinnenprofils 20 bewegt wird, an dessen erster Längsseite 21 das Halteelement 50 angeordnet ist. An dem ersten Tragrinnenprofil 20 erkennt man dessen auch für das zweite (identische) Tragrinnenprofil gültige Struktur mit einem Tragrinnenprofilboden 23, einem daran angeordneten, von dem Tragrinnenprofilboden 23 abstehenden Tragsteg 24 mit einem Quersteg 26. Außerdem springt von dem Tragrinnenprofilboden zu jeder Längsseite 21, 22 je ein Stützelement 28, 29 zur Abstützung von Sprossenteilen 40 vor, die Stützelemente 28, 29 sind dabei im Wesentlichen parallel zu dem Tragsteg 24 ausgerichtet.

Das an dem Tragrinnenprofil 20 angeordnete Halteelement 50 in der Fig. 3b bildet eine Aufnahme 51, die im Querschnitt in etwa C-förmig ausgebildet ist und zu dem Tragsteg 24 parallel ist. Dabei ist das Halteelement 50 entlang ersten Längsseite 21 des Tragrinnenprofils 20 bzw. des Tragstegs 24 verschiebbar vorgesehen, wobei es mit einem hakenartigen Vorsprung 53 an der der Längsseite zugewandten Seite des Aufnahmebodens 52 in eine Scharnieröffnung 54 eingreift, wodurch das Halteelement 50 gegen den Tragsteg 24 verschwenkbar eingerichtet ist. Außerdem stützt das Halteelement 50 sich mit einem Stützsteg 55 an der ersten Längsseite 21 des ersten Tragrinnenprofils 20 bzw. des Tragstegs 24 ab. An einem dem Tragrinnenprofilboden 23 des Tragrinnenprofils 20 zugewandten Aufnahmeschenkel 56a der Aufnahme 51 ist das in den Eingriffsabschnitt 48 des Sprossenteils 40 aufgenommene freie Ende 57 des Halteelements 50 und ein Rastarm 58 angeordnet, dessen freies Ende eingerichtet ist, mit einem Rastvorsprung 59 an dem Tragsteg 24 zu verrasten und derart das Halteelement 50 und damit später das Solarmodul 100 festzulegen.

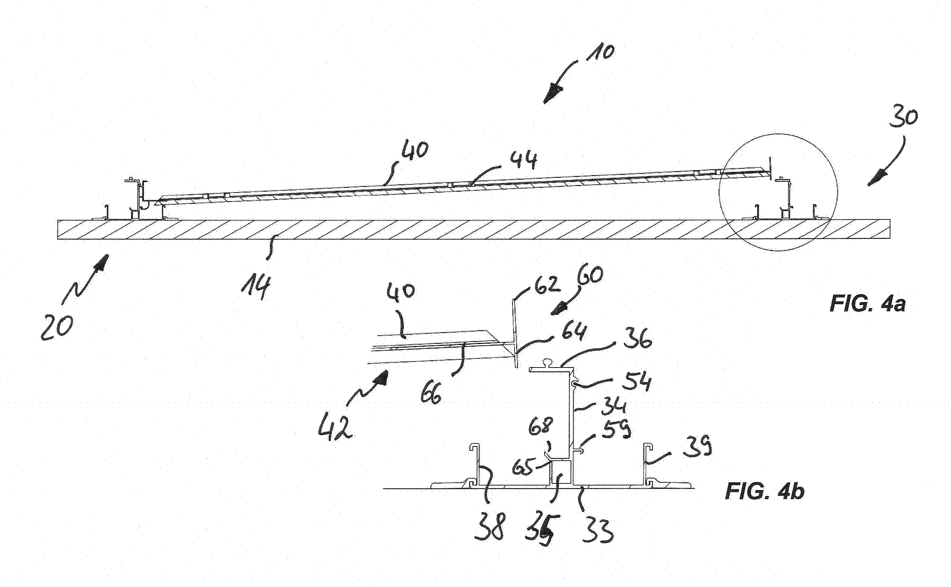

Die Fig. 4a, 4b zeigen eine ebene Seitenansicht der Traganordnung 10 der Fig. 3a, 3b in welcher der dem ersten Tragrinnenprofil 20 zugewandte Endbereich 41 des Sprossenteils 40 das freie Ende 57 des Halteelements 50 aufnimmt und das andere, zweite Ende 42 des Sprossenteils 40 in Richtung des zweite Tragrinnenprofils 30 geschwenkt wird. Die Merkmale des zweiten Tragrinnenprofils sind mit den diesen zugeordneten Bezugsziffern versehen, jedoch kann das zweite Tragrinnenprofil 30 bei einer Fortsetzung der Traganordnung in der Ansicht der Fig.4 nach recht wieder ein erstes Tragrinnenprofil 20 bilden, und weiter rechts ein zweites Tragrinnenprofil 30 angeordnet sein. Gleiches gilt für die Fortsetzung der Traganordnung nach der für den Betrachter linken Seite.

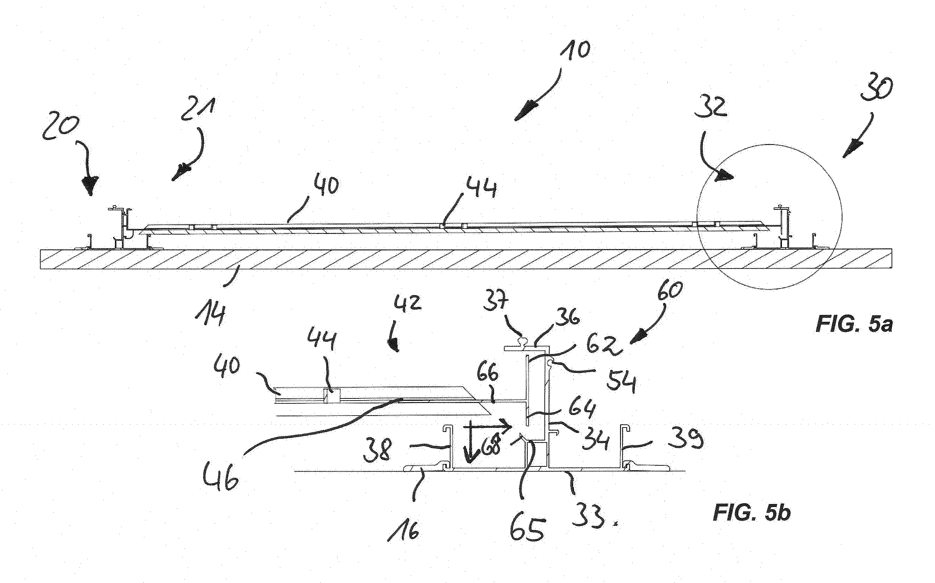

Die Fig. 5a, 5b zeigen eine ebene Seitenansicht der Traganordnung 10 der Fig. 4a, 4b in welcher der dem zweiten Tragrinnenprofil 30 zugewandte zweite Endbereich 42 des Sprossenteils 40 an das betreffende Tragrinnenprofil 30 verschwenkt ist, kurz bevor der Endbereich 42 des Sprossenteils 40 auf dem Stützelement 38 des zweiten Tragrinnenprofils 30 zu liegen kommt. In der Fig. 5b erkennt man dazu, dass in dieser Stellung des Sprossenteils 40 das an diesem angeordnete, mit dem Führungsglied 66 in die Führung 46 eingebrachten Verriegelungselement 60 mit seinem Halteglied 62 und seinem Riegelglied 64 derart in die Nähe der zweiten Längsseite 32 des zweiten Tragrinnenprofils 30 gebracht wird, dass das Ende des Riegelglieds 64 eine Querschnittsänderung 65 des Tragstegs 34 hintergreift. Die Richtungspfeile besagen hier, dass der Endbereich 42 des Sprossenteils 40 nach unten in Richtung auf das Stützelement 38 zu und das Verriegelungselement 60 für den Betrachter nach rechts in Richtung des Tragstegs 34 bewegt wird. An dem Verriegelungsglied 60 ist erkennbar, dass das das Halteglied 62 und das Riegelglied 64 kollinear zueinander ausgebildet sind, und das Führungsglied 66 in Richtung des Sprossenteils 40 weist.

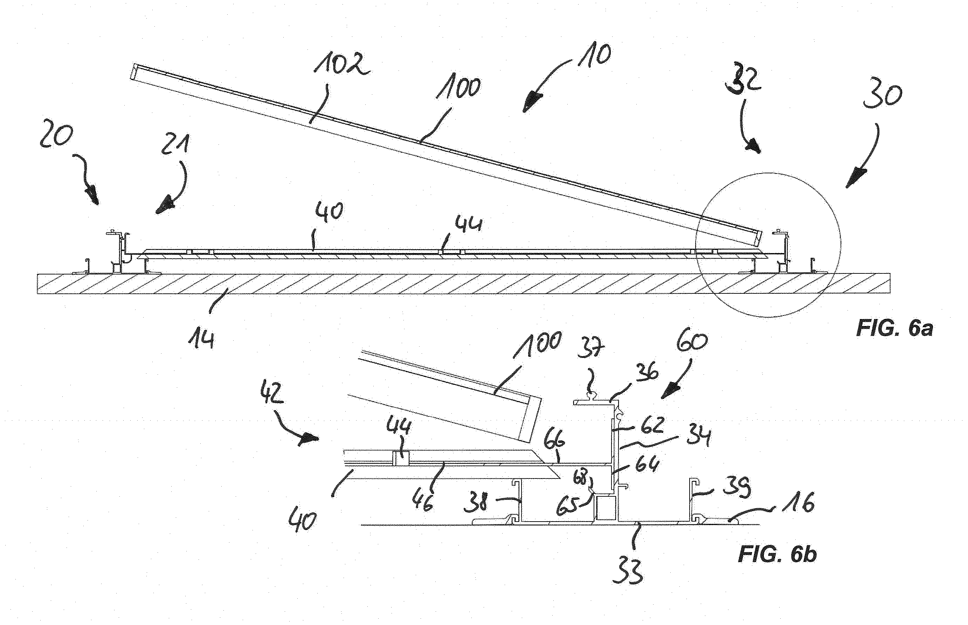

Die Fig. 6a, 6b zeigen eine ebene Seitenansicht der Traganordnung 10 der Fig. 5a, 5b bei welche sich das Sprossenteil 40 zwischen den Tragrinnenprofilen 20, 30 erstreckt und in welcher ein Solarmodul 100 an der Traganordnung 10 angeordnet wird, wobei zunächst ein Endbereich des Solarmoduls 100 in der Nähe der zweiten Längsseite 32 des zweiten Tragrinnenprofils 30 und des zweiten Endbereichs 42 des Sprossenteils 40 angeordnet wird. Der zweite Endbereich des Sprossenteils 40 sitzt dabei auf dem Stützelement 38 auf der zweiten Längsseite 32 des zweiten Tragrinnenprofils 30 auf, während das Verriegelungselement 60 mit seinem Halteglied 62 an der zweiten Längsseite 32 des zweiten Tragrinnenprofils anliegt und das freie Ende des Riegelglieds 64 sich an der Querschnittänderung 65 des Tragstegs 34 abstützt.

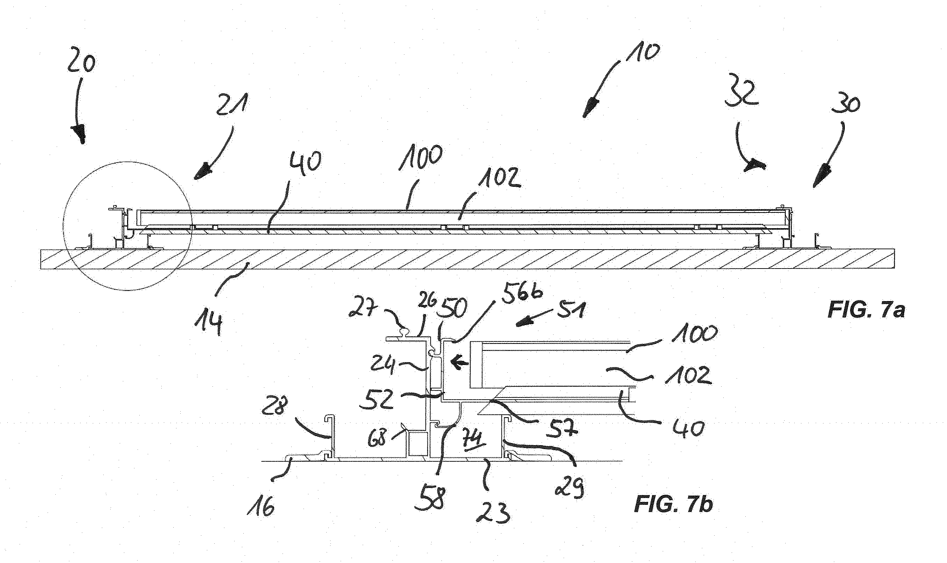

Die Fig. 7a, 7b zeigen eine ebene Seitenansicht der Traganordnung 10 der Fig. 6a, 6b in welcher das Solarmodul 100 mit seinen Rahmenstück 102 in dem Sprossenteil 40 aufgenommen ist, und das dem ersten Tragrinnenprofil 20 zugewandte stirnseitige Ende des Solarmoduls 100, auf die erste Längsseite 21 des ersten Tragrinnenprofils 20 durch Verschieben zu bewegt wird, was durch den Richtungspfeil der Fig. 7b angedeutet ist. Hierbei untergreift dieses Ende des Solarmoduls den am oberen, dem Tragrinnenprofilboden 23 abgewandten Ende der Aufnahme 51 angeordneten Aufnahmeschenkel 56b und kann nun nicht mehr von dem Tragrinnenprofilboden 23 weg gerichtet ausweichen. Weiter erkennt man im Querschnitt der Fig. 7a, dass der Tragrinnenprofilboden 23, das Stützelement 29, der erste Endbereich 41 des Sprossenteils 40 zusammen mit dem freien Ende 57 des Halteelements 50 sowie dem Rastarm 58, dem Rastvorsprung 59 und einem unteren Abschnitt des Tragstegs 24 einen in Betrachtungsrichtung fortgesetzten, dann nicht immer vollständig umschlossenen Bauraum 74 einfassen, der zur Entwässerung der Traganordnung 10 genutzt wird.

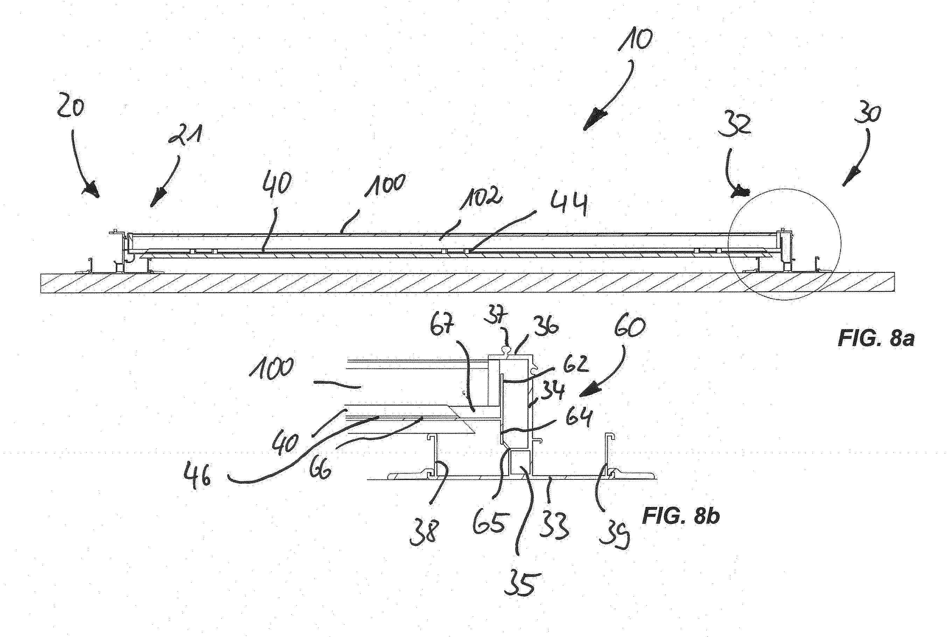

Die Fig. 8a, 8b zeigen eine ebene Seitenansicht der Traganordnung 10 der Fig. 7a, 7b in welcher das Solarmodul 100 an der Traganordnung 10 durch Verriegeln des Verriegelungselements 60 an der zweiten Längsseite 32 des zweiten Tragrinnenprofils 30 festgelegt wird. Hierzu wird das an seinem Führungsglied 66 in der Führung 46 des Sprossenteils 40 geführte Verriegelungselement in Richtung auf das Sprossenteil 40 zu bewegt, wodurch sein Riegelglied 64 zum einen durch seine ausreichende Flexibilität vor die Querschnittsänderung 65 gedrückt wird, zum anderen durch seine hierfür ausreichende Steifigkeit und die Form der Querschnittsänderung 65 des Tragstegs 34 als Rücksprung 68 an der zweiten Längsseite 32 des Tragrinnenprofils 30 keine Gelegenheit hat, mit dieser wieder in Eingriff zu gelangen. Dabei besteht die Querschnittsänderung 65 des Tragstegs 34 hier darin, dass in seinem den Tragrinnenprofilboden 33 zugewandten Abschnitt der Hohlraum 35 ausgebildet ist, der einen im Querschnitt viereckigen Rand hat, in dessen einem Endbereich der erwähnte Rücksprung 68 gebildet ist. Nach oben ist das Solarmodul 100 hier durch einen von dem Tragsteg 34 quer weg weisenden Quersteg 36 gesichert, der an dem freien Ende des Tragstegs 34 angeordnet ist und von diesem vorspringt und dieser Längsseite 32 zugewandte Endbereiche nebeneinander angeordneter Solarmodule 100 an deren Oberfläche übergreift. An dem Führungsglied 66 des Verriegelungselements ist, beginnend an denn den anderen Gliedern 62, 64 zugewandten Ende zu beiden Seiten je ein Ableitstück 67 angeformt, das in Richtung des freien Endes des Verriegelungsstücks so weit reicht, dass unabhängig vom Bewegungsweg des Verriegelungsglieds 66 nie ein Seitenbereich des Führungsglieds 66 ohne Ableitstück 67 freiliegt. Auf diese Weise kann verhindert werden, dass von den Solarmodulen 100 abzuführende Nässe aus dem Querschnitt der Sprossenteile 40 austreten kann.

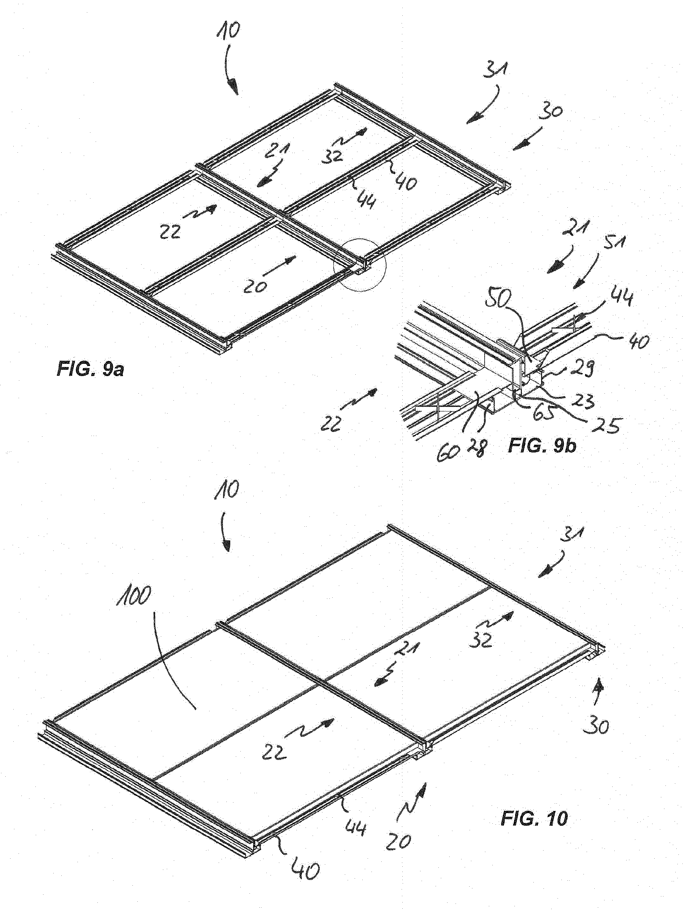

Die Fig. 9a, 9b zeigt eine perspektivische Ansicht von oben auf einen Ausschnitt einer Traganordnung 10 ohne Solarmodule 100 und eine Vergrößerung des stirnseitigen Bereichs eines im Grunde beliebigen ersten oder zweiten Tragrinnenprofils 20, 30 mit seinen beiden Längsseiten 21, 22, 31, 32. Zu erkennen ist anhand der Fig. 9a, dass die Traganordnung 10 sowohl in Längs- wie in Querrichtung fortsetzbar ist. An einem seitlichen Ende der Traganordnung, an einem sogenannten Ortgang, kann, da hier nur ein Rahmenstück eines Solarmoduls 100 zu halten ist, ein schmaleres Sprossenteil vorgesehen sein, in welches lediglich das eine Rahmenstück eingreift.

Die Fig. 10 zeigt eine perspektivische Ansicht von oben auf den Ausschnitt einer Traganordnung 10 aus der Fig. 9 mit hier vier gezeigten Solarmodulen 100, wodurch ein Ausschnitt je zweier paralleler Solarmodule 100 in zwei Reihen an der Traganordnung gebildet ist, die durch n = 3 zueinander parallele Tragrinnenprofile gehalten sind. Dabei erkennt man in der Fig. 10 gut, dass die Sprossenteile 40 der Traganordnung 10 eben dort angeordnet sind, wo sich zwei Solarmodule 100 mit ihren Längsseiten benachbart gegenüberliegen, so dass die Rahmenstücke beider Solarmodule gemeinsam in den Querschnitt des zugeordneten Sprossenteils eingreifen können. In der Fig. 10 bilden die Solarmodule 100 Flächenstücke der gleichen Ebene. In der Nomenklatur dieser Beschreibung kann das in der Fig. 10 dargestellte erste Tragrinnenprofil 20 bezüglich des nicht beschrifteten, hinteren Teils der Darstellung wieder ein zweites Tragrinnenprofil 30 bilden, und das hintere Tragrinnenprofil ein Tragrinnenprofil 20. In der Ansicht der Fig. 10 wäre bei Anbringung der Traganordnung 10 an einem (nicht dargestellten) Satteldach das zweiter Tragrinnenprofil 30 dem First, und das erste Tragrinnenprofil 20 der Traufe zugewandt.

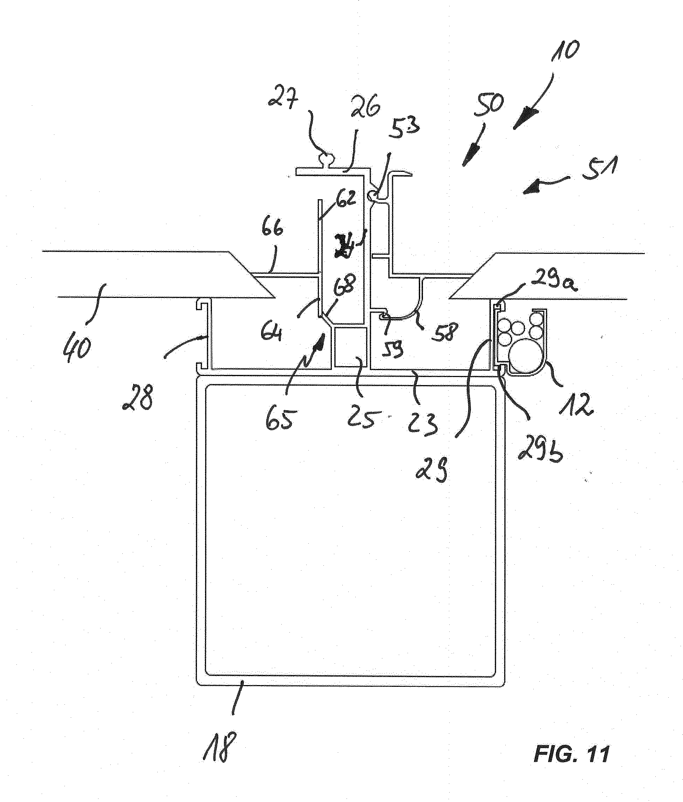

Die Fig. 11 zeigt schließlich eine ebene Seitenansicht einer Ausführungsform der Traganordnung 10, bei der ein Tragrinnenprofil 20 (ohne Solarmodule 100) mit einer Pfette 18 einer Dachstruktur bspw. durch Verschweißen verbunden wurde. Dabei überspannt der Tragrinnenprofilboden 23 die Breite der Pfette 18, die den Tragrinnenprofilboden 23 und damit das Tragrinnenprofil 20 selbst abstützt. An dem Stützelement 29 des Tragrinnenprofils 20 ist außerdem zu erkennen, dass an dessen dem Tragsteg 24 abgewandten Eingriffen 29a, 29b ein Kabelkanal 12 eingehängt ist, der der Elektrifizierung des Modulfeldes dient. Dieser kann auch auf der gegenüberliegenden Seite des Tragstegs eingehängt werden. Weiter erkennt man an dem an dem freien Ende des Tragstegs 24 befindlichen Quersteg 26 einen dem Tragrinnenprofilboden 23 abgewandten Führungsvorsprung 27, bei dem Tragrinnenprofil 30 der Fig. 8 ist dieser mit Bezugsziffer 37 gezeigt. Mittels der Führungsvorsprünge kann die Traganordnung 10 mittels eines nicht dargestellten Fahrsystems, das an den Führungsvorsprüngen 27, 37 geführt wird, befahren werden.

Vorstehend wurde mithin erfindungsgemäß eine geschaffen und zur Verfügung gestellt, die vorgesehen und eingerichtet ist, Solarmodule 100 gegenüber einer von diesen Solarmodulen 100 überdeckten Fläche beabstandet abzustützen, ist mit wenigstens zwei parallel zueinander verlaufenden Tragrinnenprofilen 20, 30, die jeweils mit einem Tragsteg 24, 34 und an diesem mit einer ersten Längsseite 21, 31 und einer zweiten Längsseite 22, 32 versehen, wobei zwischen den Tragstegen 24, 34 der wenigstens zwei Tragrinnenprofile 10, 20 eine Mehrzahl von Solarmodulen 100 angeordnet ist, die in Gebrauchsstellung entlang ihrer Längsseiten nebeneinander liegen. Die erfindungsgemäße Traganordnung 10 hat eine Mehrzahl von Sprossenteilen 40, die sich jeweils zwischen den wenigstens zwei parallelen Tragrinnenprofilen 20, 30 erstrecken, und Rahmenstücke 102 zweier benachbarter Solarmodule 100 zumindest mittelbar abstützen, und eine Mehrzahl von Halteelementen 50, welche mit einer ersten Längsseite 21 des Tragstegs 24 eines ersten der wenigstens zwei Tragrinnenprofile 20 lösbar verbindbar gehalten und abgestützt sind, wobei jeweils ein zugeordnetes Sprossenteil 40 an seinem ersten Ende 41 in einem Eingriffsabschnitt ein freies Ende 57 eines Halteelements 50 stirnseitig aufnimmt. Außerdem hat die erfindungsgemäße Traganordnung 10 eine Mehrzahl von Verrieglungselementen 60, die jeweils an einem zweiten Ende 42 eines der Sprossenteile 40 anordenbar oder angeordnet sind, welches der zweiten Längsseite 32 eines Tragstegs 34 eines zweiten der wenigstens zwei Tragrinnenprofile 20, 30 zugewandt ist, wobei jedes der Verrieglungselemente 60 eingerichtet ist, an dem zweiten Ende 42 des jeweiligen Sprossenteils 40 in einer Führung 46 entlang von dessen Längserstreckung bewegbar zu sein und mit der zweiten Längsseite 32 des Tragstegs 34 des zweiten Tragrinnenprofils 30 durch Verschieben entlang der Führung 46 derart verbunden zu werden, dass die dem zweiten Tragrinnenprofil 30 zugewandten Enden der Solarmodule 100 zusammen mit dem Ende 42 der Sprossenteile 40 an dem Tragsteg 34 des zweiten Tragrinnenprofils 30 gehalten und verriegelt sind.

Entsprechend konnte gezeigt werden, dass die gestellte Aufgabe durch die Erfindung mit einer Traganordnung 10 entsprechend den Merkmalen des Hauptanspruchs gelöst wird.

### Bezugszeichenliste

- 10: Traganordnung
- 12: Kabelkanal
- 14: Sparren
- 16: Klemmelement
- 18: Pfette
- 20: erstes Tragrinnenprofil
- 21: erste Längsseite erstes Tragrinnenprofil
- 22: zweite Längsseite erstes Tragrinnenprofil
- 23: Tragrinnenprofilboden
- 24: Tragsteg
- 25: Hohlraum
- 26: Quersteg
- 27: Führungsvorsprung
- 28: Stützelement
- 29: Stützelement
- 29a, b: Eingriff an Stützelement
- 30: zweites Tragrinnenprofil
- 31: erste Längsseite zweites Tragrinnenprofil
- 32: zweite Längsseite zweites Tragrinnenprofil
- 33: Tragrinnenprofilboden
- 34: Tragsteg
- 35: Hohlraum
- 36: Quersteg
- 37: Führungsvorsprung
- 38: Stützelement
- 39: Stützelement
- 40: Sprossenteil
- 41: erstes Ende/erster Endbereich des Sprossenteils
- 42: zweites Ende/zweiter Endbereich des Sprossenteils
- 44: Abstandsstück
- 46: Führung
- 48: Eingriffsabschnitt
- 50: Halteelement
- 51: Aufnahme
- 52: Aufnahmeboden
- 53: hakenartiger Vorsprung
- 54: Scharnieröffnung
- 55: Stützsteg
- 56a, b: Aufnahmeschenkel
- 57: freies Ende von Halteelement
- 58: Rastarm
- 59: Rastvorsprung
- 60: Verriegelungselement
- 62: Halteglied
- 64: Riegelglied
- 65: Querschnittänderung von Tragsteg
- 66: Führungsglied
- 67: Ableitstück
- 68: Rücksprung
- 74: Bauraum zur Entwässerung
- 100: Solarmodul
- 102: Rahmenstück

## Patentansprüche

1. Traganordnung (10), die vorgesehen und eingerichtet ist, Solarmodule (100) gegenüber einer von diesen Solarmodulen (100) überdeckten Fläche beabstandet abzustützen,
mit wenigstens zwei parallel zueinander verlaufenden Tragrinnenprofilen (20, 30), die jeweils mit mindestens einem Tragsteg (24, 34) versehen sind, der seinerseits jeweils eine erste Längsseite (21, 31) und eine zweite Längsseite (22, 32) aufweist, wobei zwischen den Tragstegen (24, 34) der wenigstens zwei Tragrinnenprofile (20, 30) eine Mehrzahl von Solarmodulen (100) angeordnet ist, die in Gebrauchsstellung entlang ihrer Längsseiten nebeneinander liegen,
mit einer Mehrzahl von Sprossenteilen (40), die sich jeweils zwischen den wenigstens zwei parallelen Tragrinnenprofilen (20, 30) erstrecken, und jeweils Rahmenstücke (102) zweier benachbarter Solarmodule (100) zumindest mittelbar abstützen,
**dadurch gekennzeichnet, dass** die Traganordnung (10) weiter aufweist:
eine Mehrzahl von Halteelementen (50), welche mit einer ersten Längsseite (21) des Tragstegs (24) eines ersten Tragrinnenprofils (20) der wenigstens zwei Tragrinnenprofile (20, 30) lösbar verbindbar gehalten und abgestützt sind, wobei jeweils ein zugeordnetes Sprossenteil (40) an seinem ersten Ende (41) in einem Eingriffsabschnitt ein freies Ende (57) eines Halteelements (50) stirnseitig aufnimmt; und
eine Mehrzahl von Verrieglungselementen (60), die jeweils an einem zweiten Ende (42) eines der Sprossenteile (40) anordenbar oder angeordnet sind, welches der zweiten Längsseite (32) eines Tragstegs (34) eines zweiten Tragrinnenprofils (30) der wenigstens zwei Tragrinnenprofile (20, 30) zugewandt ist, wobei jedes der Verrieglungselemente (60) eingerichtet ist, an dem zweiten Ende )42) des jeweiligen Sprossenteils (40) in einer Führung (46) entlang von dessen Längserstreckung bewegbar zu sein und mit der zweiten Längsseite (32) des Tragstegs (34) des zweiten Tragrinnenprofils (30) durch Verschieben entlang der Führung (46) derart verbunden zu werden, dass die dem zweiten Tragrinnenprofil (30) zugewandten Enden der Solarmodule (100) zusammen mit dem Ende (42) der Sprossenteile (40) an dem Tragsteg (32) des zweiten Tragrinnenprofils (30) gehalten und verriegelt sind.

2. Traganordnung nach Anspruch 1, wobei die erste Längsseite (21, 31) und die zweite Längsseite (31, 32) der Tragstege (24, 34) der wenigstens zwei Tragrinnenprofile (20, 30) sich unterscheiden und die wenigstens zwei Tragrinnenprofile (20, 30) jeweils mit einem Boden (23, 33) versehen sind, von dem der jeweilige Tragsteg (24, 34) vorspringt.

3. Traganordnung nach Anspruch 1 oder 2, wobei Längsseiten (21, 22, 31, 32) der Tragrinnenprofile jeweils voneinander beabstandet ausgebildet sind und an ihren oberen und unteren Enden jeweils durch den Tragrinnenprofilboden (23, 33) und ein Dachstück (27, 37) verbunden sind, wodurch ein Hohlraum (25, 35) an dem jeweiligen Tragrinnenprofil (20, 30) ausgebildet ist.

4. Traganordnung nach einem der Ansprüche 2 oder 3, wobei der Boden (23, 33) der wenigstens zwei Tragrinnenprofile (20, 30) zu jeder Längsseite (21, 22, 31, 32) des jeweiligen Tragstegs (20, 30) ein Stützelement (28, 29, 38, 39) aufweist, das von dem Boden (23, 33) absteht und dessen freies Ende einen Endbereich (4, 42) eines Sprossenteils (40) trägt.

5. Traganordnung nach einem der vorhergehenden Ansprüche wobei die Sprossenteile (40) eine vorgebbare Länge und einen nach oben offenen Querschnitt, insbesondere einen C- oder U-förmigen Querschnitt, aufweisen, in welchen die Rahmenstücke (102) der benachbarten Solarmodule (100) jeweils eingreifen.

6. Traganordnung nach einem der vorhergehenden Ansprüche, wobei jedem Sprossenteil (40) zumindest ein Abstandsstück (44) zugeordnet ist, das in dem Querschnitt des Sprossenteils (40) lösbar aufgenommen ist und eine Auflage für die Rahmenstücke (102) der Solarmodule (100) bildet.

7. Traganordnung nach einem der vorhergehenden Ansprüche, wobei jedes Halteelement (50) eine im Querschnitt in etwa C-förmige Aufnahme (51) mit einem parallel zu dem Tragsteg (24, 34) angeordneten Aufnahmeboden (51) aufweist, die die Eckbereiche von zwei benachbarten Solarmodulen (100) von mindestens zwei Seiten umgreift.

8. Traganordnung nach einem der vorhergehenden Ansprüche, wobei jedes der Halteelemente (50) entlang der ersten Längsseite (21, 31) des Tragrinnenprofils (20) verschiebbar vorgesehen ist, wobei es mit einem hakenartigen Vorsprung (53) an der der ersten Längsseite (21) zugewandten Seite des Aufnahmebodens (52) in eine Scharnieröffnung (54) an der ersten Längsseite (21) eingreift, wodurch das Halteelement 50) gegen den Tragsteg (24, 34) verschwenkbar eingerichtet ist.

9. Traganordnung nach einem der vorhergehenden Ansprüche, wobei an einem dem Boden (23) des Tragrinnenprofils (20) zugewandten Schenkel (56a) der Aufnahme (51) das in den Eingriffsabschnitt des Sprossenteils (40) aufgenommene freie Ende (57) des Halteelements (50) und ein Rastarm (58) angeordnet ist, dessen freies Ende eingerichtet ist, mit einem Rastvorsprung (59) an dem Tragsteg (24) zu verrasten und derart das Halteelement (50) festzulegen.

10. Traganordnung nach Anspruch 9, wobei an den Tragrinnenprofilen (20, 30) an dem freien Ende des Tragstegs (24) ein Quersteg (26) angeordnet ist, der von der zweiten Längsseite (32) vorspringt und dieser Längsseite (32) zugewandte Endbereiche nebeneinander angeordneter Solarmodule (100) an deren Oberfläche übergreift.

11. Traganordnung nach einem der vorhergehenden Ansprüche, wobei die Verriegelungselemente (60) mehrgliedrig mit einem Halteglied (62), einem Riegelglied (64) und einem Führungsglied (66) vorgesehen sind, wobei das Halteglied (62) und das Riegelglied (64) sich im Wesentlichen parallel zueinander und zu der zweiten Längsseite (32) des Tragstegs (34) erstrecken, während das Führungsglied (66) quer dazu in Richtung des Sprossenteils (40) vorspringt.

12. Traganordnung nach Anspruch 11, wobei das Riegelglied (64) des Verriegelungselements (60) eingerichtet ist, während des Verriegelns des Verriegelungselements (60) durch Bewegen entlang des zugeordneten Sprossenteils (40) mit seinem freien Ende eine Querschnittsänderung (65) der zweiten Längsseite (32) zu überwinden, die eine nachfolgende umgekehrte Bewegung des Verriegelungselements (60) blockiert.

13. Traganordnung nach einem der vorhergehenden Ansprüche, wobei die Tragrinnenprofile (20, 30) jeweils mit einem Strukturelement einer Dachstruktur verbindbar oder verbunden sind.

14. Traganordnung nach einem der vorhergehenden Ansprüche, wobei die Traganordnung (10) eine Anzahl von n zueinander parallelen Tragrinnenprofilen (20, 30) aufweist und n eine natürliche Zahl ≥ 2 ist und/oder die Traganordnung (10) in Erstreckungsrichtung der Tragrinnenprofile (20, 30) durch Anordnung mehrerer Tragrinnenprofile (20, 30) hintereinander fortsetzbar oder fortgesetzt ist.

15. Traganordnung nach einem der vorhergehenden Ansprüche, wobei die Tragrinnenprofile (20, 30) vorgesehen sind, die Solarmodule (100) der Traganordnung (10) derart relativ zueinander anzuordnen, dass die Solarmodule (100) Flächenstücke jeweils der gleichen Ebene oder gekrümmten Fläche bilden.

## Claims

1. A supporting arrangement (10) designed and arranged to support solar modules (100) at a distance from a surface covered by these solar modules (100),
with at least two load-bearing channel profiles (20, 30) running parallel to one another, which are each provided with at least one load-bearing web (24, 34), which in turn has a first longitudinal side (21, 31) and a second longitudinal side (22, 32), wherein a plurality of solar modules (100) are arranged between the supporting webs (24, 34) of the at least two supporting channel profiles (20, 30), which solar modules (100) are located next to one another along their longitudinal sides in the position of use,
with a plurality of rung parts (40), which each extend between the at least two parallel carrier channel profiles (20, 30) and each at least indirectly support frame pieces (102) of two adjacent solar modules (100),
**characterised in that** the supporting arrangement (10) further comprises:
a plurality of holding elements (50), which are held and supported such that they can be detachably connected to a first longitudinal side (21) of the supporting web (24) of a first supporting channel profile (20) of the at least two supporting channel profiles (20, 30), wherein a respective associated rung part (40) receives at its first end (41) in an engagement section a free end (57) of a holding element (50) on the end face; and
a plurality of locking elements (60), each of which can be arranged or is arranged on a second end (42) of one of the crossbar parts (40) that faces the second longitudinal side (32) of a supporting web (34) of a second supporting channel profile (30) of the at least two supporting channel profiles (20, 30), wherein each of the locking elements (60) is designed to be movable along the second end ( 42) of the respective crossbar part (40) in a guide (46) so as to be movable along the longitudinal extent thereof and to be connected to the second longitudinal side (32) of the supporting web (34) of the second supporting channel profile (30) by displacement along the guide (46) in such a way that the ends of the solar modules (100) facing the second supporting channel profile (30) are held and locked together with the end (42) of the crossbar parts (40) on the supporting web (32) of the second supporting channel profile (30).

2. Supporting arrangement according to claim 1, wherein the first longitudinal side (21, 31) and the second longitudinal side (31, 32) of the carrier webs (24, 34) of the at least two carrier channel profiles (20, 30) differ and the at least two carrier channel profiles (20, 30) are each provided with a base (23, 33) from which the respective supporting web (24, 34) projects.

3. Supporting arrangement according to claim 1 or 2, wherein longitudinal sides (21, 22, 31, 32) of the supporting channel profiles are each formed at a distance from one another and are each connected at their upper and lower ends by the supporting channel profile base (23, 33) and a roof piece (27, 37), whereby a hollow space (25, 35) is formed on the respective carrier channel profile (20, 30).

4. Supporting arrangement according to one of claims 2 or 3, wherein the bottom (23, 33) of the at least two supporting channel profiles (20, 30) has a supporting element (28, 29, 38, 39) on each longitudinal side (21, 22, 31, 32) of the respective supporting web (20, 30), which projects from the base (23, 33) and whose free end carries an end region (4, 42) of a rung part (40).

5. Supporting arrangement according to one of the preceding claims, wherein the rung parts (40) have a predeterminable length and an upwardly open cross section, in particular a C- or U-shaped cross section, in which the frame pieces (102) of the neighbouring solar modules (100) engage in each case.

6. Supporting arrangement according to one of the preceding claims, wherein at least one spacer (44) is associated with each bar part (40), is detachably received in the cross-section of the bar part (40) and forms a support for the frame parts (102) of the solar modules (100).

7. Supporting arrangement according to one of the preceding claims, wherein each holding element (50) has a receiving means (51) which is approximately C-shaped in cross-section and has a receiving bottom arranged parallel to the supporting web (24, 34), which receiving means engages around the corner regions of two adjacent solar modules (100) from at least two sides.

8. Supporting arrangement according to one of the preceding claims, wherein each of the holding elements (50) is provided displaceably along the first longitudinal side (21, 31) of the supporting channel profile (20), wherein it engages with a hook-like projection (53) on the side of the receiving base (52) facing the first longitudinal side (21) in a hinge opening (54) on the first longitudinal side (21), whereby the holding element (50) is set up so that it can be pivoted against the supporting web (24, 34).

9. Supporting arrangement according to one of the preceding claims, wherein the free end (57) of the holding element (50) received in the engagement portion of the rung part (40) and a latching arm (58) are arranged on a limb (56a) of the receiver (51) facing the bottom (23) of the supporting channel profile (20), the free end of the holding element being adapted to locking with a locking projection (59) on the carrier web (24) and in this way to fix the holding element (50).

10. Supporting arrangement according to claim 9, wherein a crosspiece (26) is arranged on the supporting channel profiles (20, 30) at the free end of the supporting web (24), said crosspiece (26) projecting from the second longitudinal side (32) and engaging over end regions, facing this longitudinal side (32), of solar modules (100) arranged next to one another on the surface of said modules.

11. Supporting arrangement according to one of the preceding claims, wherein the locking elements (60) are provided in a multipart form with a holding part (62), a latching part (64) and a guiding part (66), wherein the holding member (62) and the locking member (64) extend substantially parallel to each other and to the second longitudinal side (32) of the supporting web (34), while the guide member (66) projects transversely thereto in the direction of the crossbar part (40).

12. Supporting arrangement according to claim 11, wherein the locking member (60) is arranged to during the locking of the locking element (60) by moving along the associated rung part (40) with its free end, to overcome a cross-sectional change (65) of the second longitudinal side (32), which blocks a subsequent reverse movement of the locking element (60).

13. Supporting arrangement according to one of the preceding claims, wherein the supporting channel sections (20, 30) are each connectable or connected to a structural element of a roof structure.

14. Supporting arrangement according to one of the preceding claims, wherein the carrier arrangement (10) has a number n of carrier channel profiles (20, 30) parallel to one another and n is a natural number ≥ 2 and/or the carrier arrangement (10) can be or is continued in the direction of extension of the carrier channel profiles (20, 30) by arranging a plurality of carrier channel profiles (20, 30) one behind the other.

15. Supporting arrangement according to one of the preceding claims, wherein the supporting channel sections (20, 30) are provided to arrange the solar modules (100) of the supporting structure (10) relative to one another in such a way that the solar modules (100) form surface portions each of the same plane or curved surface.

## Revendications

1. Dispositif de support (10) qui est prévu et aménagé pour soutenir à distance des modules solaires (100) par rapport à une surface recouverte par ces modules solaires (100),
avec au moins deux profilés de support en forme de gouttière (20, 30) parallèles entre eux, qui sont chacun pourvus d'au moins une traverse de support (24, 34), qui présente de son côté un premier côté longitudinal (21, 31) et un deuxième côté longitudinal (22, 32), une pluralité de modules solaires (100) étant disposés entre les barrettes porteuses (24, 34) des au moins deux profilés de rainure de support (20, 30), lesquels modules solaires sont juxtaposés dans la position d'utilisation le long de leurs côtés longitudinaux,
avec une pluralité d'éléments d'entretoise (40) qui s'étendent chacun entre les au moins deux profilés de support parallèles (20, 30) et supportent au moins indirectement les éléments de cadre (102) de deux modules solaires (100) adjacents,
**caractérisé en ce que** le dispositif de support (10) comprend en outre :
une pluralité d'éléments de maintien (50), qui sont maintenus et soutenus de manière amovible par un premier côté longitudinal (21) de la nervure porteuse (24) d'un premier profilé de rail porteur (20) des au moins deux profilés de rail porteur (20, 30), une pièce de meneau (40) associée recevant à son extrémité (41) une extrémité libre (57) d'un élément de maintien (50) dans une section d'engagement ; et
une pluralité d'éléments de verrouillage (60), qui peuvent être disposés ou sont disposés chacun à une deuxième extrémité (42) de l'une des parties de meneau (40), laquelle est tournée vers le deuxième côté longitudinal (32) d'une âme porteuse (34) d'un deuxième profilé de rainure porteuse (30) des au moins deux profilés de rainure porteuse (20, 30), chacun des éléments de verrouillage (60) étant conçu pour pouvoir être déplacé dans un guidage (46) le long de l'extension longitudinale de la deuxième extrémité ( 42) de la partie de traverse respective (40) dans un guidage (46) le long de son extension longitudinale et d'être relié au deuxième côté longitudinal (32) de l'âme porteuse (34) du deuxième profilé de rainure de support (30) par coulissement le long du guidage (46) de telle sorte de sorte que les extrémités des modules solaires (100) tournées vers le deuxième profilé porteur en forme de gouttière (30) sont maintenues et verrouillées avec l'extrémité (42) des traverses (40) sur l'âme porteuse (32) du deuxième profilé porteur en forme de gouttière (30).

2. Dispositif de support selon la revendication 1, dans lequel le premier côté longitudinal (21, 31) et le deuxième côté longitudinal (31, 32) des nervures de support (24, 34) des au moins deux profilés de rainure de support (20, 30) diffèrent et les au moins deux profilés de rainure de support (20, 30) sont chacun pourvus d'un fond (23, 33) dont dépasse la nervure porteuse (24, 34) correspondante.

3. Dispositif de support selon la revendication 1 ou 2, dans lequel les côtés longitudinaux (21, 22, 31, 32) des profilés porteurs en forme de gouttière sont espacés les uns des autres et sont reliés à leurs extrémités supérieure et inférieure par le fond (23, 33) du profilé porteur en forme de gouttière et par un élément de toit (27, 37), ce qui permet de former un espace creux (25, 35) au niveau de chaque profilé de gouttière porteur (20, 30).

4. Dispositif de support selon l'une des revendications 2 ou 3, le fond (23, 33) des au moins deux profilés de rainure de support (20, 30) présentant un élément de support (28, 29, 38, 39) pour chaque côté longitudinal (21, 22, 31, 32) de l'âme porteuse respective (20, 30),qui dépasse du fond (23, 33) et dont l'extrémité libre porte une zone d'extrémité (4, 42) d'un élément de meneau (40).

5. Dispositif de support Dispositif de support selon l'une des revendications précédentes, dans laquelle les éléments d'échelons (40) présentent une longueur prédéfinie et une section transversale ouverte vers le haut, en particulier une section transversale en forme de C ou de U, dans laquelle s'engagent respectivement les pièces de cadre (102) des modules solaires (100) voisins..

6. Dispositif de support selon l'une des revendications précédentes, dans laquelle au moins une pièce d'écartement (44) est associée à chaque partie de barreau (40), laquelle est logée de manière amovible dans la section transversale de la partie de barreau (40) et forme un support pour les pièces de cadre (102) des modules solaires (100).

7. Dispositif de support selon l'une des revendications précédentes, dans lequel chaque élément de maintien (50) présente un logement (51) de section transversale approximativement en forme de C avec un fond de logement (51) disposé parallèlement à l'âme porteuse (24, 34), qui entoure les zones d'angle de deux modules solaires (100) voisins d'au moins deux côtés.

8. Dispositif de support selon l'une des revendications précédentes, dans lequel chacun des éléments de retenue (50) est prévu de manière à pouvoir coulisser le long du premier côté longitudinal (21, 31) du profilé de rainure de support (20), une saillie en forme de crochet (53) sur le côté du fond de réception (52) tourné vers le premier côté longitudinal (21) s'engageant dans une ouverture de charnière (54) sur le premier côté longitudinal (21), l'élément de retenue (50) pouvant ainsi pivoter contre l'âme porteuse (24, 34).

9. Dispositif de support selon l'une des revendications précédentes, dans lequel l'extrémité libre (57) de l'élément de retenue (50) logée dans la partie d'engagement de la traverse (40) et un bras d'encliquetage (58) dont l'extrémité libre est conçue pour s'enclencher avec une saillie d'enclenchement (59) sur la traverse porteuse (24) et fixer ainsi l'élément de maintien (50).

10. Dispositif de support selon la revendication 9, dans lequel une traverse (26) est disposée sur les profilés de support (20, 30) à l'extrémité libre de l'âme porteuse (24), laquelle traverse dépasse du deuxième côté longitudinal (32) et recouvre les zones d'extrémité des modules solaires (100) disposés côte à côte et tournées vers ce côté longitudinal (32).

11. Dispositif de support selon l'une des revendications précédentes, dans lequel les éléments de verrouillage (60) sont prévus en plusieurs parties avec un élément de retenue (62), un élément de verrouillage (64) et un élément de guidage (66), l'élément de maintien (62) et l'élément de verrouillage (64) s'étendant essentiellement parallèlement l'un à l'autre et au deuxième côté longitudinal (32) de la traverse porteuse (34), tandis que l'élément de guidage (66) fait saillie transversalement à ceux-ci en direction de la partie meneau (40).

12. Dispositif de support selon la revendication 11, dans lequel l'élément de verrouillage (64) de l'élément de verrouillage (60) est agencé de manière à pendant le verrouillage de l'élément de verrouillage (60), en se déplaçant le long de la partie de meneau (40) associée, de surmonter avec son extrémité libre une modification de section (65) du deuxième côté longitudinal (32), qui bloque un mouvement inverse ultérieur de l'élément de verrouillage (60).

13. Dispositif de support selon l'une des revendications précédentes, les profilés de support (20, 30) pouvant être reliés ou étant reliés à un élément structurel d'une structure de toit.

14. Dispositif de support selon l'une des revendications précédentes, le dispositif porteur (10) présentant un nombre n de profilés porteurs en forme de gouttière (20, 30) parallèles les uns aux autres, n étant un nombre naturel ≥ 2, et/ou le dispositif porteur (10) pouvant être prolongé ou étant prolongé dans le sens de l'extension des profilés porteurs en forme de gouttière (20, 30) par la dispositif de plusieurs profilés porteurs en forme de gouttière (20, 30) les uns derrière les autres.

15. Dispositif de support selon l'une des revendications précédentes, dans lequel les profilés de support (20, 30) sont prévus pour disposer les modules solaires (100) du dispositif porteur (10) les uns par rapport aux autres de telle sorte que les modules solaires (100) forment des portions de surface respectivement du même plan ou de la même surface courbe.
